# EUROPÄISCHE PATENTSCHRIFT

(11) **EP 3 103 779 B1**
(45) Veröffentlichungstag und Bekanntmachung des Hinweises auf die Patenterteilung: **26.07.2017**
(21) Anmeldenummer: 15171587.7
(22) Anmeldetag: 11.06.2015
(51) Int. Cl.: C04B 28/34, C04B 111/00, C04B 35/03, C04B 35/16, C04B 35/63, C04B 35/632, C04B 28/00, C04B 35/66, B22D 41/02, C04B 35/04

(54) **TUNDISHMASSE**
TUNDISH MASS
MASSE DE REPARTITEUR

(43) Veröffentlichungstag der Anmeldung: 14.12.2016
(73) Patentinhaber: Weerulin GmbH, 45472 Mülheim (DE)
(72) Erfinder: Helmus, Dominic, 45131 ESSEN (DE)
(74) Vertreter: Dr. Stark & Partner Patentanwälte mbB

(56) Entgegenhaltungen:
- EP-A1- 1 953 487
- DE-B4-102007 032 892
- S.M SIADATI, A. MONSHI: "Acidic and basic binders for magnesite based aggegate in plaster of tundish", CERAMICS INTERNATIONAL, Bd. 35, 15. April 2009 (2009-04-15), Seiten 2845-2852, XP002750957, Iran

## Beschreibung

Die Erfindung betrifft eine Tundishmasse, die vorzugsweise als Verschleißfutter eingesetzt wird, mit wenigstens einer feuerfesten Basiskomponente und einem Bindemittel, welches zumindest eine basische Bindemittelkomponente und wenigstens eine saure Bindemittelkomponente umfasst.

Aus der Praxis sind derartige Tundishmassen bekannt, bei denen die feuerfeste Basiskomponente mit dem Bindemittel in klebeflüssiger Form vermischt wird. Die Handhabung des Bindemittels aufgrund der klebenden Eigenschaften ist hierbei jedoch nicht ganz einfach,

Daher wurde auch ein Verfahren entwickelt, bei dem die feuerfeste Basiskomponente mit einem trockenen Bestandteil des Bindemittels vermischt ist und vor dem Einsatz von Wasser das Abbinden und Aushärten durch Zugabe eingeleitet wird. Eine solche Tundishmasse ist beispielsweise in der DE 10 2007 032 892 B4 beschrieben.

Nachteilig hierbei ist, dass vor Ort Wasser zur Verfügung stehen muss, damit die Mischung vorbereitet werden kann.

Aufgabe der Erfindung ist es, die vorgenannten Nachteile zu vermeiden und eine Möglichkeit anzugeben, flexibel ohne Wassererfordernis eine Tundishmasse einsatzfähig zu machen.

Diese Aufgabe wird bei einer gattungsgemäßen Tundishmasse dadurch gelöst, dass die Tundishmasse aus zwei getrennt zu bevorratenden und erst unmittelbar vor dem Einsatz zu mischenden separaten trockenen Tundishmassenkomponenten zusammenmischbar ist, wobei die eine Tundishmassenkomponente nur die basische(n) Bindemittelkomponente(n) und die andere Tundishmassenkomponente nur die saure(n) Bindemittelkomponente(n) umfasst, wobei die Bindemittelkomponenten beider Tundishmassenkomponenten für eine Reaktion miteinander ohne Zugabe einer Flüssigkeit bei Vermischen der beiden Tundishmassenkomponenten ausgebildet sind, und wobei zumindest eine der beiden Tundishmassenkomponenten wenigstens eine feuerfeste Basiskomponente aufweist. Hierdurch ist lediglich durch Zusammenmischen der Tundishmassenkomponenten, je nach Zusammensetzung in dem entsprechenden Verhältnis der beiden Tundishmassenkomponenten, eine einsatzfertige Tundishmasse erzeugbar. Dies kann an beliebiger Stelle unabhängig von einer dort ggf. vorhandenen Wasserversorgung erfolgen.

Als feuerfeste Basiskomponente kommen beispielsweise Sintermagnesia, Schmelzmagnesia oder calcinierte Magnesia in Frage, gleichermaßen auch Olivin, Dunit, Doloma, Kalkstein oder beliebige Kombinationen aus den vorgenannten oder anderen geeigneten Materialien. Besonders bevorzugt sind Sintermagnesia, Olivin und Mischungen hieraus.

Als saure Bindemittelkomponenten kommen beispielsweise anorganische und organische Säuren sowie deren Hydrate und Salze in Frage, wie z. B. Zitronensäure, Amidosulfonsäure, Oxalsäure, Essigsäure, Weinsäure, Borsäure, Phosphorsäure, Borphosphat, Aluminiumphosphat, Hydrogenphosphat, Natriummetaphosphat oder beliebige Kombinationen aus den vorgenannten oder anderen geeigneten Materialien. Bevorzugt sind als saure Bindemittelkomponenten mittelstarke Säuren wie Zitronensäure, Amidosulfonsäure, Phosphorsäure, Borphosphat, Aluminiumorthophosphat oder Natriummetaphosphat.

Als basische Bindemittelkomponenten kommen beispielsweise anorganische Basen sowie deren Hydrate und Salze in Frage, wie z. B. Alkalisilikate, Alkalimetasilikate, Natriumphosphat, Alkalihydroxide, Erdalkalihydroxide oder beliebige Kombinationen aus den vorgenannten oder anderen geeigneten Materialien. Bevorzugt sind als basische Bindemittelkomponenten ein basisches Hydrat von Alkalimetasilikat oder Natriumphosphat.

Vorzugsweise kann eine saure Bindemittelkomponente Zitronensäure sein. Auch kann eine saure Bindemittelkomponente Amidosulfonsäure und/oder Aluminiumphosphat und/oder Borphosphat und/oder Borsäure und/oder Natriummetaphosphat sein. Auch sind Kombinationen der vorgenannten sauren Bindemittelkomponenten, ggf. auch mit anderen sauren Bindemittelkomponenten, in beliebigen Zusammensetzungen möglich.

Erfindungsgemäß kann eine basische Bindemittelkomponente Natriumphosphat-Hydrat sein. Auch kann eine basische Bindemittelkomponente Natriummetasilikat-Hydrat sein.

Erfindungsgemäß kann das Mengenverhältnis der sauren Bindemittelkomponente(n) zu den basischen Bindemittelkomponente(n) 4:1 bis 1:4 sein.

Vorzugsweise können beide Tundishmassenkomponenten jeweils wenigstens eine uneinheitliche feuerfeste Basiskomponente aufweisen und/oder jeweils wenigstens eine identische feuerfeste Basiskomponente beinhalten.

Dabei können beide Tundishmassenkomponenten hinsichtlich der jeweils enthaltenen sauren bzw. basischen Bindemittelkomponente(n) derart aufeinander abgestimmt sein, dass das Mischungsverhältnis der Tundishmassenkomponenten 1:1 ist.

Vorzugsweise kann der absolute Anteil der sauren Bindemittelkomponente(n) am Gesamtgewicht ihrer Tundishmassenkomponente zwischen 0,1% bis 20 Gew.-%, vorzugsweise 0,5 bis 5 Gew.-%, liegen.

Bei einem bevorzugten Ausführungsbeispiel der Erfindung kann der absolute Anteil der basischen Bindemittelkomponente(n) am Gesamtgewicht ihrer Tundishmassenkomponente zwischen 0,1% bis 20 Gew.-%, vorzugsweise 0,5 bis 5 Gew.-%, liegen.

Erfindungsgemäß können die absoluten Anteile der sauren Bindemittelkomponente(n) zusammen mit den basischen Bindemittelkomponente(n) am Gesamtgewicht der Tundishmasse zwischen 0,1% bis 40 Gew.-%, vorzugsweise 0,5 bis 10 Gew.-%, liegen.

## Patentansprüche

1. Tundishmasse, mit wenigstens einer feuerfesten Basiskomponente und einem Bindemittel, welches zumindest eine basische Bindemittelkomponente und wenigstens eine saure Bindemittelkomponente umfasst, **dadurch gekennzeichnet, dass** die Tundishmasse aus zwei getrennt zu bevorratenden und erst unmittelbar vor dem Einsatz zu mischenden separaten trockenen Tundishmassenkomponenten zusammenmischbar ist, wobei die eine Tundishmassenkomponente nur die basische(n) Bindemittelkomponente(n) und die andere Tundishmassenkomponente nur die saure(n) Bindemittelkomponente(n) umfasst, wobei die Bindemittelkomponenten beider Tundishmassenkomponenten für eine Reaktion miteinander ohne Zugabe einer Flüssigkeit bei Vermischen der beiden Tundishmassenkomponenten ausgebildet sind, und wobei zumindest eine der beiden Tundishmassenkomponenten wenigstens eine feuerfeste Basiskomponente aufweist.

2. Tundishmasse nach dem vorhergehenden Anspruch, **dadurch gekennzeichnet, dass** eine saure Bindemittelkomponente Zitronensäure ist.

3. Tundishmasse nach einem der vorhergehenden Ansprüche, **dadurch gekennzeichnet, dass** eine saure Bindemittelkomponente Amidosulfonsäure ist.

4. Tundishmasse nach einem der vorhergehenden Ansprüche, **dadurch gekennzeichnet, dass** eine saure Bindemittelkomponente Aluminiumphosphat ist.

5. Tundishmasse nach einem der vorhergehenden Ansprüche, **dadurch gekennzeichnet, dass** eine saure Bindemittelkomponente Borphosphat ist.

6. Tundishmasse nach einem der vorhergehenden Ansprüche, **dadurch gekennzeichnet, dass** eine saure Bindemittelkomponente Borsäure ist.

7. Tundishmasse nach einem der vorhergehenden Ansprüche, **dadurch gekennzeichnet, dass** eine saure Bindemittelkomponente Natriummetaphosphat ist.

8. Tundishmasse nach einem der vorhergehenden Ansprüche, **dadurch gekennzeichnet, dass** eine basische Bindemittelkomponente Natriumphosphat-Hydrat ist.

9. Tundishmasse nach einem der vorhergehenden Ansprüche, **dadurch gekennzeichnet, dass** das eine basische Bindemittelkomponente Natriummetasilikat-Hydrat ist.

10. Tundishmasse nach einem der vorhergehenden Ansprüche, **dadurch gekennzeichnet, dass** das Mengenverhältnis der sauren Bindemittelkomponente(n) zu den basischen Bindemittelkomponente(n) 4:1 bis 1:4 ist.

11. Tundishmasse nach einem der vorhergehenden Ansprüche, **dadurch gekennzeichnet, dass** beide Tundishmassenkomponenten jeweils wenigstens eine uneinheitliche feuerfeste Basiskomponente aufweisen und/oder jeweils wenigstens eine identische feuerfeste Basiskomponente beinhalten.

12. Tundishmasse nach einem der vorhergehenden Ansprüche, **dadurch gekennzeichnet, dass** beide Tundishmassenkomponenten hinsichtlich der jeweils enthaltenen sauren bzw. basischen Bindemittelkomponente(n) derart aufeinander abgestimmt sind, dass das Mischungsverhältnis der Tundishmassenkomponenten 1:1 ist.

13. Tundishmasse nach einem der vorhergehenden Ansprüche, **dadurch gekennzeichnet, dass** der absolute Anteil der sauren Bindemittelkomponente(n) am Gesamtgewicht ihrer Tundishmassenkomponente zwischen 0,1% bis 20 Gew.-%, vorzugsweise 0,5 bis 5 Gew.-%, liegt.

14. Tundishmasse nach einem der vorhergehenden Ansprüche, **dadurch gekennzeichnet, dass** der absolute Anteil der basischen Bindemittelkomponente(n) am Gesamtgewicht ihrer Tundishmassenkomponente zwischen 0,1% bis 20 Gew.-%, vorzugsweise 0,5 bis 5 Gew.-%, liegt.

15. Tundishmasse nach einem der vorhergehenden Ansprüche, **dadurch gekennzeichnet, dass** die absoluten Anteile der sauren Bindemittelkomponente(n) zusammen mit den basischen Bindemittelkomponente(n) am Gesamtgewicht der Tundishmasse zwischen 0,1% bis 40 Gew.-%, vorzugsweise 0,5 bis 10 Gew.-%, liegen.

## Claims

1. Tundish mass, with at least one fireproof basic component and a binding agent, which comprises at least one alkaline binding agent and at least one acidic binding agent component, **characterised in that** the tundish mass can be composed of two separate dry tundish mass components which are to be stored separately and only mixed directly before use, wherein the one tundish mass component comprises only the alkaline binding agent component(s), and the other tundish mass component comprises only the acidic binding agent component(s), wherein the binding agent components of both tundish mass components are configured for a reaction with each other, without the addition of a liquid, at the mixing of the two tundish mass components, and wherein at least one of the two tundish mass components comprises at least one fireproof basic component.

2. Tundish mass according to the preceding claim, **characterised in that** an acidic binding agent component is citric acid.

3. Tundish mass according to any one of the preceding claims, **characterised in that** an acidic binding agent component is amidosulfonic (sulfamic) acid.

4. Tundish mass according to any one of the preceding claims, **characterised in that** an acidic binding agent component is aluminium phosphate.

5. Tundish mass according to any one of the preceding claims, **characterised in that** an acidic binding agent component is boron phosphate.

6. Tundish mass according to any one of the preceding claims, **characterised in that** an acidic binding agent component is boric acid.

7. Tundish mass according to any one of the preceding claims, **characterized in that** an acidic binding agent component is sodium metaphosphate.

8. Tundish mass according to any one of the preceding claims, **characterised in that** an alkaline binding agent component is sodium phosphate hydrate.

9. Tundish mass according to any one of the preceding claims, **characterised in that** an alkaline binding agent component is sodium metasilicate hydrate.

10. Tundish mass according to any one of the preceding claims, **characterised in that** the quantity ratio of the acidic binding agent component(s) to the alkaline binding agent component(s) is 4:1 to 1:4.

11. Tundish mass according to any one of the preceding claims, **characterised in that** both tundish mass components in each case comprise at least one non-uniform fireproof base component and/or in each case contain at least one identical fireproof base component.

12. Tundish mass according to any one of the preceding claims, **characterised in that** both tundish mass components are matched to one another in respect of the acidic or alkaline binding agent component(s) contained in each case, in such a way that the mixing ratio of the tundish mass components is 1:1.

13. Tundish mass according to any one of the preceding claims, **characterised in that** the absolute proportion of the acidic binding agent component(s) in the total weight of its tundish mass component lies between 0.1% to 20% by weight, and preferably 0.5 to 5% by weight.

14. Tundish mass according to any one of the preceding claims, **characterised in that** the absolute proportion of the alkaline binding agent component(s) in the total weight of its tundish mass component lies between 0.1% to 20% by weight, and preferably 0.5 to 5% by weight.

15. Tundish mass according to any one of the preceding claims, **characterised in that** the absolute proportion of the acidic binding agent component(s) together with the alkaline binding agent component(s) in the total weight of the tundish mass lies between 0.1 % to 40% by weight, and preferably 0.5 to 10% by weight.

## Revendications

1. Masse de répartiteur, comportant au moins un composant de base réfractaire et un liant qui comprend au moins un composant basique de liant et au moins un composant acide de liant, **caractérisée en ce que** la masse de répartiteur peut être formée par mélange de deux composants de masse de répartiteur secs, séparés, à mélanger avant l'emploi, l'un desdits composants de masse de répartiteur comprenant seulement le(s) composant(s) basique(s) de liant et l'autre desdits composants de masse de répartiteur comprenant seulement le(s) composant(s) acide(s) de liant, les composants de liant des deux composants de la masse de répartiteur étant conçus pour une réaction l'un avec l'autre sans addition d'un liquide lors du mélange des deux composants de la masse de répartiteur et au moins l'un des deux composants de la masse de répartiteur comportant au moins un composant de base réfractaire.

2. Masse de répartiteur selon la revendication précédente, **caractérisée en ce qu'**un composant acide de liant est l'acide citrique.

3. Masse de répartiteur selon l'une quelconque des revendications précédentes, **caractérisée en ce qu'**un composant acide de liant est l'acide amidosulfonique.

4. Masse de répartiteur selon l'une quelconque des revendications précédentes, **caractérisée en ce qu'**un composant acide de liant est le phosphate d'aluminium.

5. Masse de répartiteur selon l'une quelconque des revendications précédentes, **caractérisée en ce qu'**un composant acide de liant est le phosphate de bore.

6. Masse de répartiteur selon l'une quelconque des revendications précédentes, **caractérisée en ce qu'**un composant acide de liant est l'acide borique.

7. Masse de répartiteur selon l'une quelconque des revendications précédentes, **caractérisée en ce qu'**un composant acide de liant est le métaphosphate de sodium.

8. Masse de répartiteur selon l'une quelconque des revendications précédentes, **caractérisée en ce qu'**un composant basique de liant est le phosphate de sodium hydraté.

9. Masse de répartiteur selon l'une quelconque des revendications précédentes, **caractérisée en ce qu'**un composant basique de liant est le métasilicate de sodium hydraté.

10. Masse de répartiteur selon l'une quelconque des revendications précédentes, **caractérisée en ce que** le rapport quantitatif du/des composant(s) acide(s) de liant au(x) composant(s) basique(s) de liant vaut de 4:1 à 1:4.

11. Masse de répartiteur selon l'une quelconque des revendications précédentes, **caractérisée en ce que** les deux composants de la masse de répartiteur comportent chacun au moins un composant de base réfractaire qui est différent de celui de l'autre et/ou chacun au moins un composant de base réfractaire qui est identique à celui de l'autre.

12. Masse de répartiteur selon l'une quelconque des revendications précédentes, **caractérisée en ce que** les deux composants de la masse de répartiteur sont accordés l'un à l'autre en ce qui concerne le(s) composant(s) acide(s) ou respectivement basique(a) contenu(s) dans chacun, de manière que le rapport de mélange des composants de la masse de répartiteur soit égal à 1:1.

13. Masse de répartiteur selon l'une quelconque des revendications précédentes, **caractérisée en ce que** la proportion absolue du/des composant(s) acide(s) de liant par rapport au poids total de son/leur composant de la masse des composants de répartiteur est comprise entre 0,1 % et 20 % en poids, de préférence entre 0,5 et 5 % en poids.

14. Masse de répartiteur selon l'une quelconque des revendications précédentes, **caractérisée en ce que** la proportion absolue du/des composant(s) basique(s) de liant par rapport au poids total de son/leur composant de la masse de répartiteur est comprise entre 0,1 % et 20 % en poids, de préférence entre 0,5 et 5 % en poids.

15. Masse de répartiteur selon l'une quelconque des revendications précédentes, **caractérisée en ce que** les proportions absolues du/des composant(s) acide(s) de liant conjointement avec le(s) composant(s) basique(s) de liant, par rapport au poids total de la masse de répartiteur sont comprises entre 0,1 % et 40 % en poids, de préférence entre 0,5 et 10 % en poids.
